# EUROPEAN PATENT APPLICATION

(11) **EP 4 787 943 A1**
(43) Date of publication of application: **05.08.2026**
(21) Application number: 23953718.6
(22) Date of filing: 28.09.2023
(51) Int. Cl.: H04W 24/10

(54) **CAPABILITY REPORTING METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); ZHANG, Lei, Beijing 100022 (CN)
(74) Representative: Haseltine Lake Kempner LLP
(86) International application number: PCT/CN2023/122750
(87) International publication number: WO 2025/065571

(57) **Abstract**

Embodiments of this disclosure provide a capability reporting method and apparatus. The method is applied to a terminal equipment capable of supporting an 8-transmission (8Tx) uplink transmission. The terminal equipment supports a full power mode 2. The method includes: a terminal equipment transmits full power capability reporting information to a network device.

## Description

### Technical Field

Embodiments of this disclosure relate to the field of communication technologies.

### Background

In the fifth generation (5G) mobile communication system or new radio (NR) mobile communication system, before Rel-18, a terminal equipment (UE) is able to support up to 4Tx for uplink transmission. The terminal equipment may be divided into a non-coherent UE, a partial coherent UE and a full coherent UE according to a coherent type of the terminal equipment.

On the other hand, Rel-16 introduces characteristics of uplink full power transmission that is able to increase an uplink transmission power of the terminal equipment supporting uplink MIMO. The uplink full power transmission includes a Mode 0, a Mode 1 and a Mode 2, which may be referred to a full power mode 0 (ul-FullPwrMode), a full power mode 1 (ul-FullPwrModel), and a full power mode 2 (ul-FullPwrMode2).

It should be noted that the above introduction to the background is merely provided for clear and complete explanation of the technical solutions of this disclosure and for easy understanding by those skilled in the art. And it should not be understood that these technical solutions are known to those skilled in the art only because they are described in the background of this disclosure.

### Summary

The inventors found that an 8Tx uplink transmission had been introduced for a physical uplink shared channel (PUSCH) in NR Rel-18, and an operation in a full power mode 2 had been extended to support 8 ports, therefore, capability reporting needed to be enhanced for a terminal equipment supporting the full power mode 2.

In view of at least one of the above problems, embodiments of this disclosure provide a capability reporting method and apparatus.

According to one aspect of the embodiments of this disclosure, there is provided a capability reporting method applied to a terminal equipment capable of supporting an 8-transmission (8Tx) uplink transmission, the terminal equipment supporting a full power mode 2, wherein the method includes:
transmitting, by the terminal equipment, full power capability reporting information to a network device.

According to another aspect of the embodiments of this disclosure, there is provided a capability reporting apparatus configured in a terminal equipment capable of supporting an 8-transmission (8Tx) uplink transmission, the terminal equipment supporting a full power mode 2, wherein the reporting apparatus includes:
a transmitting unit configured to transmit full power capability reporting information to a network device.

According to another aspect of the embodiments of this disclosure, there is provided a capability reporting method applied to a network device, including:
receiving, by the network device, full power capability reporting information transmitted by a terminal equipment, wherein the terminal equipment is capable of supporting an 8-transmission (8Tx) uplink transmission and supporting a full power mode 2.

According to another aspect of the embodiments of this disclosure, there is provided a capability reporting apparatus configured in a network device, including:
a receiving unit configured to receive full power capability reporting information transmitted by a terminal equipment, wherein the terminal equipment is capable of supporting an 8-transmission (8Tx) uplink transmission and supporting a full power mode 2.

According to another aspect of the embodiments of this disclosure, there is provided a communication system, including:
a terminal equipment, capable of supporting an 8-transmission (8Tx) uplink transmission and supporting a full power mode 2, configured to transmit full power capability reporting information to a network device; and
the network device configured to receive the full power capability reporting information transmitted by the terminal equipment.

One of the advantageous effects of the embodiments of this disclosure is to enhance the capability reporting of the terminal equipment supporting the full power mode 2, thereby increasing flexibility and reliability and reducing overhead.

With reference to the following description and drawings, the particular embodiments of this disclosure are disclosed in detail, and the manners in which the principle of this disclosure can be used are indicated. It should be understood that the scope of the embodiments of this disclosure is not limited thereto. The embodiments of this disclosure contain a plurality of alternations, amendments and equivalents within the spirits and clauses of the appended claims.

Features that are described and/or illustrated with respect to one embodiment may be used in a same way or in a similar way in one or more other embodiments, and/or in combination with or instead of the features of the other embodiments.

It should be emphasized that the term "comprise/include" when used herein refers to the presence of features, integers, steps or components but does not preclude the presence or addition of one or more other features, integers, steps, or components.

### Brief Description of the Drawings

Elements and features depicted in one drawing or embodiment of this disclosure may be combined with elements and features depicted in one or more additional drawings or embodiments. Moreover, in the drawings, like reference numerals designate corresponding parts throughout the several views and may be used to designate corresponding parts in more than one embodiment.
FIG. 1 is a schematic diagram illustrating a communication system according to embodiments of this disclosure;
FIG. 2 is a schematic diagram illustrating a capability reporting method according to embodiments of this disclosure;
FIG. 3 is a schematic diagram illustrating a capability reporting method according to embodiments of this disclosure;
FIG. 4 is a schematic diagram illustrating a capability reporting apparatus according to embodiments of this disclosure;
FIG. 5 is a schematic diagram illustrating a capability reporting apparatus according to embodiments of this disclosure;
FIG. 6 is a schematic diagram illustrating a network device according to embodiments of this disclosure; and
FIG. 7 is a schematic diagram illustrating a terminal equipment according to embodiments of this disclosure.

### Detailed Description

These and further features of this disclosure will be apparent with reference to the following description and drawings. In the description and drawings, particular embodiments of the disclosure have been disclosed in detail as being indicative of some of the embodiments in which the principles of the disclosure may be employed, but it should be understood that this disclosure is not limited to the embodiments described herein. Rather, this disclosure includes all alternations, amendments and equivalents falling within the scope of the appended claims.

In the embodiments of this disclosure, terms "first", "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include", "have" refer to presence of stated features, elements, components, or assemblies, but do not exclude presence or addition of one or more other features, elements, components, or assemblies.

In the embodiments of this disclosure, singular forms "a", "the", etc., include plural forms, and should be understood as "a kind of" or "a type of" in a broad sense, but should not be limited to a meaning of "one"; and the term "the" should be understood as including both a singular form and a plural form, except clearly specified otherwise. Furthermore, the term "according to" should be understood as "at least partially according to", the term "based on" should be understood as "at least partially based on", except clearly specified otherwise.

In the embodiments of this disclosure, the term "communication network" or "wireless communication network" may refer to a network satisfying any one of communication standards, such as Long Term Evolution (LTE), Long Term Evolution-Advanced (LTE-A), Wideband Code Division Multiple Access (WCDMA), and High-Speed Packet Access (HSPA), etc.

Furthermore, communication between devices in a communication system may be performed according to communication protocols at any stage, which may, for example, include but not limited to the communication protocols: 1G (generation), 2G, 2.5G, 2.75G, 3G, 4G, 4.5G, and 5G, New Radio (NR) and 6G in the future, etc., and/or other communication protocols that are currently known or will be developed in the future.

In the embodiments of this disclosure, the term "network device", for example, refers to a device in a communication system that accesses terminal equipment to a communication network and provides services for the terminal equipment. The network device may include but not limited to devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), an IAB host, etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographic area. And a term "cell" may refer to a base station and/or its coverage area, depending on a context in which the term is used.

In the embodiments of this disclosure, the term "user equipment" (UE) or "terminal equipment or terminal device" (TE) refers to, for example, equipment accessing to a communication network and receiving network services via a network device. The terminal equipment may be fixed or mobile, and may also be referred to as a mobile station (MS), a terminal, a subscriber station (SS), an access terminal (AT), a station, etc.

The terminal equipment may include but not limited to devices: a cellular phone, a personal digital assistant (PDA), a wireless modem, a wireless communication device, a handheld device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipment described above. "A device" in this text may refer to a network device, and may also refer to a terminal equipment, except otherwise specified.

A scenario of an embodiment in this disclosure shall be described below by way of examples. However, this disclosure is not limited thereto.

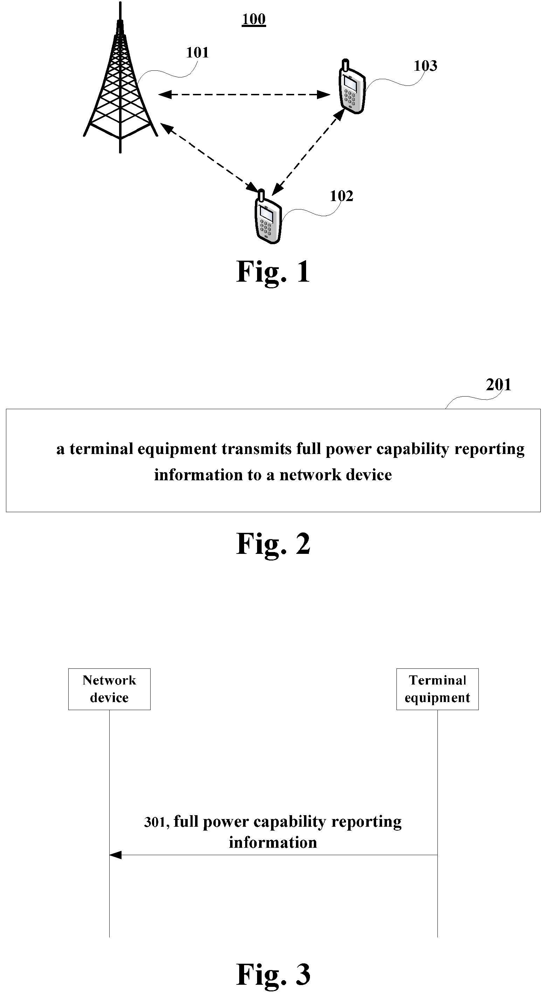

FIG. 1 is a schematic diagram illustrating a communication system according to an embodiment of this disclosure, which schematically illustrates a situation in which a terminal equipment and a network device are used as an example. As illustrated in the FIG. 1, a communication system 100 may include a network device 101 and a terminal equipment 102 and 103. For the sake of simplicity, the FIG. 1 only illustrates two terminal equipments and one network device as an example, however, the embodiments of this disclosure are not limited thereto.

In the embodiments of this disclosure, existing services or services that may be implemented in the future may be transmitted between the network device 101 and the terminal equipments 102 and 103. For example, these services may include but are not limited to: an enhanced Mobile Broadband (eMBB), a massive Machine Type Communication (mMTC), and an Ultra-Reliable and Low-Latency Communication (URLLC), etc.

It should be noted that the FIG. 1 illustrates that both the terminal equipments 102 and 103 fall within a coverage of the network device 101, however, this disclosure is not limited thereto. Both the terminal equipments 102 and 103 may not fall within the coverage of the network device 101, or one terminal equipment 102 falls within the coverage of the network device 101 and the other terminal equipment 103 falls out of the coverage of the network device 101.

Currently, a partial coherent terminal equipment with two antenna groups (Ng = 2) is able to report capability information that is a single bit indicating which antenna group can support full power.

For a partial coherent terminal equipment with four antenna groups (Ng = 4), a quadruple may be defined for capability reporting. Table 1 schematically shows one example of capability reporting of the partial coherent terminal equipment with four antenna groups (Ng = 4), the terminal equipment supports a full power mode 2.

**Table 1**

| Indicated group | Supported layer-splitting cases for Ng = 4 |
|---|---|
| Group 1 | (x, 0, 0, 0) |
| Group 2 | (0, x, 0, 0) |
| Group 3 | (0, 0, x, 0) |
| Group 4 | (0, 0, 0, x) |
| Group 5 | (x, x, 0, 0) |
| Group 6 | (x, 0, x, 0) |
| Group 7 | (x, 0, 0, x) |
| Group 8 | (0, x, x, 0) |
| Group 9 | (0, x, 0, x) |
| Group 10 | (0, 0, x, x) |
| Group 11 | (x, x, x, 0) |
| Group 12 | (x, x, 0, x) |
| Group 13 | (x, 0, x, x) |
| Group 14 | (0, x, x, x) |

For example, x is a non-zero value, and the quadruple (x, 0, 0, 0) indicates that an antenna group #1 performs full power operation, and an antenna group #2, an antenna group #3, and an antenna group #4 do not perform full power operation. Therefore, for example, 14 bits are required to report capability information, which incurs significant overhead. In addition, the relationship between the groups is not distinctly limited, which affects the flexibility and reliability of the terminal equipment capability reporting. Therefore, the capability reporting needs to be enhanced for the terminal equipment that supports the full power mode 2.

In the embodiments of this disclosure, a higher layer signaling may be, for example, a radio resource control (RRC) signaling; for example, an RRC message, including, for example, a MIB, system information, a dedicated RRC message; or an RRC IE (RRC information element). The higher layer signaling may also be, for example, a MAC (Medium Access Control) signaling; or a MAC CE (MAC control element). However, this disclosure is not limited thereto.

In the description below, in a case where there exists no confusion, the terms "PDCCH" and "physical downlink control channel" or "downlink control information" may be interchanged, and the terms "PDSCH" and "physical downlink data channel" or "downlink data" may also be interchanged. In addition, transmitting or receiving PDCCH may be understood as transmitting or receiving the downlink control information carried by the PDCCH; transmitting or receiving PDSCH may be understood as transmitting or receiving the downlink data carried by the PDSCH.

### Embodiments of a first aspect

The embodiments of this disclosure provide a capability reporting method described from a terminal equipment side that is capable of supporting an 8-transmission (8Tx) uplink transmission, and the terminal equipment supports a full power mode 2.

FIG. 2 is a schematic diagram illustrating a capability reporting method according to an embodiment of this disclosure. As illustrated in the FIG. 2, the method includes:
201: a terminal equipment transmits full power capability reporting information to a network device.

It should be noted that the FIG. 2 only schematically illustrates the embodiments of this disclosure, however, this disclosure is not limited thereto. For example, an order of execution of the operations may be appropriately adjusted, and some other operations may be added, or some operations therein may be removed. And appropriate variants may be made by those skilled in the art according to the above content, without being limited to the disclosure illustrated in the FIG. 2.

In some embodiments, the terminal equipment is a partial coherent terminal equipment with four antenna groups (Ng 4).

For example, for the partial coherent UE with four antenna groups (Ng = 4) and supporting the full power mode 2, which antenna group and/or antenna groups is/are capable of full power operation may be reported to the network device.

In some embodiments, the full power capability reporting information includes indication information for indicating an antenna group capable of full power operation.

In some embodiments, the indication information includes one or more bits, each bit indicates a quadruple, and the quadruple indicates that one or more antenna groups among the four antenna groups are required for full power operation.

For example, a quadruple may be defined as (A, B, C, D), and A, B, C, D correspond to antenna groups #1, #2, #3 and #4, respectively. Values of A, B, C and D may be zero or non-zero (such as x). The full power operation may be achieved by an antenna group corresponding to the non-zero value (such as x). For example, (x, 0, x, 0) means that full power may be achieved by two antenna groups (i.e., an antenna group #1 and an antenna group #3).

In some embodiments, the quadruple is divided into one or more sets, in which one set corresponds to one or more quadruples.

For example, the sets may include a first set, a second set and a third set, in which the first set corresponds to a quadruple that requires one antenna group for full power operation, the second set corresponds to a quadruple that requires two antenna groups for full power operation, and the third set corresponds to a quadruple that requires three antenna groups for full power operation.

Table 2 schematically shows one example of capability reporting of the partial coherent terminal equipment with four antenna groups (Ng = 4), and the terminal equipment supports the full power mode 2.

**Table 2**

| Set | Indicated group | |
|---|---|---|
| Category#1 (first set) full power is achieved via one antenna group | Group 1 | (x, 0, 0, 0) |
| | Group 2 | (0, x, 0, 0) |
| | Group 3 | (0, 0, x, 0) |
| | Group 4 | (0, 0, 0, x) |
| Category#2 (second set) full power is achieved via two antenna groups | Group 5 | (x, x, 0, 0) |
| | Group 6 | (x, 0, x, 0) |
| | Group 7 | (x, 0, 0, x) |
| | Group 8 | (0, x, x, 0) |
| | Group 9 | (0, x, 0, x) |
| | Group 10 | (0, 0, x, x) |
| Category#3 (third set) full power is achieved via three antenna groups | Group 11 | (x, x, x, 0) |
| | Group 12 | (x, x, 0, x) |
| | Group 13 | (x, 0, x, x) |
| | Group 14 | (0, x, x, x) |

As shown in Table 2, the quadruple may be divided into a plurality of categories (or also referred to as sets). In Category #1, full power transmission may be achieved with one antenna group. In Category #2, two antenna groups are required/needed to provide full power (or at least two antenna groups are required to provide full power). In Category #3, three antenna groups are required/needed to provide full power (or at least three antenna groups are required to provide full power).

For example, the UE may report to the network device that only one category is supported, or a plurality of categories (e.g., any combination of the categories) are supported via full power capability reporting information.

In some embodiments, a terminal equipment supporting the first set may also (or may be able to, be allowed to) support (such support is alternative) the second set and/or the third set; a terminal equipment supporting the second set may also (or may be able to, be allowed to) support (such support is alternative) the third set.

Table 3 schematically shows another example of capability reporting of the partial coherent terminal equipment with four antenna groups (Ng = 4), and the terminal equipment supports the full power mode 2.

**Table 3**

| Index | Feature group | Group | |
|---|---|---|---|
| 40-7-x | Full power mode 2 operation for a partial coherent UE with four antenna groups (Ng = 4); full power is achieved via one antenna group | Group 1: (x, 0, 0, 0) | UE is able to report supportting one or more of Groups 1 to 4; |
| | | Group 2: (0, x, 0, 0) | |
| | | Group 3: (0, 0, x, 0) | |
| | | Group 4: (0, 0, 0, x) | UE supporting 40-7-x is also able to support 40-7-y and/or 40-7-z |
| 40-7-y | Full power mode 2 operation for a partial coherent UE with four antenna groups (Ng = 4); full power is achieved via two antenna groups | Group 5: (x, x, 0, 0) | UE is able to report supporting one or more of Groups 5 to 10; |
| | | Group 6: (x, 0, x, 0) | |
| | | Group 7: (x, 0, 0, x) | |
| | | Group 8: (0, x, x, 0) | UE supporting 40-7-y is also able to support 40-7-z |
| | | Group 9: (0, x, 0, x) | |
| | | Group 10: (0, 0, x, x) | |
| 40-7-z | Full power mode 2 operation for a partial coherent UE with four antenna groups (Ng = 4); full power is achieved via three antenna groups | Group 11: (x, x, x, 0) | UE is able to report supporting one or more of Groups 11 to 14 |
| | | Group 12: (x, x, 0, x) | |
| | | Group 13: (x, 0, x, x) | |
| | | Group 14: (0, x, x, x) | |

Table 4 schematically shows another example of capability reporting of the partial coherent terminal equipment with four antenna groups (Ng = 4), and the terminal equipment supports the full power mode 2.

**Table 4**

| Index | Feature group | Group | |
|---|---|---|---|
| 40-7-x | Supporting Full power mode 2 operation for a partial coherent UE with four antenna groups (Ng = 4) | | UE supporting 40-7-x is also able to support at least one of 40-7-x1 to 40-7-x3 |
| 40-7-x1 | Full power mode 2 operation for a partial coherent UE with four antenna groups (Ng = 4); full power is achieved via one antenna group | Group 1: (x, 0, 0, 0) | UE is able to report supporting one or more of Groups 1 to 4; |
| | | Group 2: (0, x, 0, 0) | |
| | | Group 3: (0, 0, x, 0) | |
| | | Group 4: (0, 0, 0, x) | UE supporting 40-7-x1 is also able to support 40-7-x2 and/or 40-7-x3 |
| 40-7-x2 | Full power mode 2 operation for a partial coherent UE with four antenna groups (Ng = 4); full power is achieved via two antenna groups | Group 5: (x, x, 0, 0) | UE is able to report supporting one or more of Groups 5 to 10; |
| | | Group 6: (x, 0, x, 0) | |
| | | Group 7: (x, 0, 0, x) | |
| | | Group 8: (0, x, x, 0) | UE supporting 40-7-x2 is also able to support 40-7-x3 |
| | | Group 9: (0, x, 0, x) | |
| | | Group 10: (0, 0, x, x) | |
| 40-7-x3 | Full power mode 2 operation for a partial coherent UE with four antenna groups (Ng = 4); full power is achieved via three antenna groups | Group 11: (x, x, x, 0) | UE is able to report supporting one or more of Groups 11 to 14 |
| | | Group 12: (x, x, 0, x) | |
| | | Group 13: (x, 0, x, x) | |
| | | Group 14: (0, x, x, x) | |

In some embodiments, the one or more sets are explicitly indicated, or the one or more sets are implicitly supported.

For example, one or more categories may be explicitly indicated as shown in Tables 2 to 4.

For another example, the groups are implicitly categorized, that is, the categories are not explicitly defined. For example, Group 1 to Group 4 correspond to Category #1, Group 5 to Group 10 correspond to Category #2, and Group 11 to Group 14 correspond to Category #3. For the Groups in the Table 2, a UE supporting the Group 1 to the Group 4 can also support the Group 5 to the Group 10 and/or the Group 11 to the Group 14. A UE supporting the Group 5 to the Group 10 can also support the Group 11 to the Group 14.

Table 5 schematically shows another example of capability reporting of the partial coherent terminal equipment with four antenna groups (Ng = 4), and the terminal equipment supports the full power mode 2.

**Table 5**

| Index | Feature group | Group | |
|---|---|---|---|
| 40-7-x | Full power mode 2 operation for a partial coherent UE with four antenna groups (Ng = 4) | Group 1: (x, 0, 0, 0) | UE is able to report supporting one or more of Groups 11 to 14; |
| | | Group 2: (0, x, 0, 0) | |
| | | Group 3: (0, 0, x, 0) | |
| | | Group 4: (0, 0, 0, x) | UE supporting one or more of Group 1 to Group 4 is also able to support one or more of Group 5 to Group 10, and/or one or more of Group 11 to Group 14; |
| | | Group 5: (x, x, 0, 0) | |
| | | Group 6: (x, 0, x, 0) | |
| | | Group 7: (x, 0, 0, x) | |
| | | Group 8: (0, x, x, 0) | |
| | | Group 9: (0, x, 0, x) | |
| | | Group 10: (0, 0, x, x) | UE supporting one or more of Group 5 to Group 10 is also able to support one or more of Group 11 to Group 14 |
| | | Group 11: (x, x, x, 0) | |
| | | Group 12: (x, x, 0, x) | |
| | | Group 13: (x, 0, x, x) | |
| | | Group 14: (0, x, x, x) | |

In some embodiments, the set includes N quadruples, in which the N is greater than or equal to 1. For example, a value of N varies for different sets.

For example, the UE may support only one group or N groups (N ≥ 1) in each category, and the category may be explicitly indicated, as shown in the Tables 2 to 4, or may be implicitly indicated, as shown in the Table 5. The value of N may be predefined. The value of N may be the same for different categories; or the value of N may be different for different categories.

In some embodiments, the terminal equipment is a full coherent terminal equipment supporting a full power mode 2, and the full power capability reporting information is the same as capability reporting information of a partial coherent terminal equipment with two antenna groups (Ng = 2).

For example, for a full coherent UE supporting a full power mode 2, the full power capability reporting may be the same as full power capability reporting of a partial coherent UE with two antenna groups (Ng = 2).

In some embodiments, the terminal equipment is a full coherent terminal equipment supporting a full power mode 2, and the full power capability reporting information is determined according to a codebook type supported by the terminal equipment.

In one example, if the terminal equipment supports a codebook of Ng = 2, the full power capability reporting information is the same as capability reporting information of a partial coherent terminal equipment with two antenna groups (Ng = 2); and if the terminal equipment supports a codebook of Ng = 4, the full power capability reporting information is the same as capability reporting information of a partial coherent terminal equipment with four antenna groups (Ng = 4).

In another example, if the terminal equipment supports codebooks of Ng = 2 and Ng = 4, the full power capability reporting information includes full power capabilities of Ng = 2 and Ng = 4; and if the terminal equipment supports neither the codebook of Ng = 2 nor the codebook of Ng = 4, the full power capabilities are not reported.

For example, the full power capability reporting depends on the codebook type supported by the UE. If the UE reports supporting the codebook of Ng = 2, the full power capability reporting may be the same as that of a partial coherent UE with Ng = 2. If the UE reports supporting the codebook of Ng = 4, the full power capability reporting may be the same as that of a partial coherent UE with Ng = 3.

For another example, if the UE reports supporting the codebooks of Ng = 2 and Ng = 4, full power capabilities of Ng = 1 and Ng = 4 should be reported. If the full coherent UE does not support the codebook of Ng = 2 or Ng = 4, the UE does not report the full power capabilities.

In some embodiments, if the terminal equipment is a partial coherent terminal equipment with two antenna groups (Ng = 2), the full power capability of Ng = 4 is also reported.

For example, for the partial coherent UE with Ng = 2, the full power capability of Ng = 4 should also be reported.

In some embodiments, if the terminal equipment reports supporting the codebook of Ng = 4, the full power capability of Ng = 4 is also reported; or if the terminal equipment does not report supporting the codebook of Ng = 4, the full power capability of Ng = 4 is not reported either.

For example, if the UE reports supporting the codebook of Ng = 4, the full power capability of Ng = 4 should also be reported; otherwise, the full power capability of Ng = 4 is not reported.

In some embodiments, an SRS resource is configured with different numbers of ports, including 1 port, 2 ports, 4 ports, or 8 ports for the full power mode 2; or the number of ports of SRS resources must be the same for the full power mode 2.

For example, one or any combination of the following SRS ports is/are reported: {(1-port, 2-ports), (1-port, 4-ports), (1-port, 8-ports), (2-ports, 4-ports), (2-ports, 8-ports), (4-ports, 8-ports), (1-port, 2-ports, 4-ports), (1-port, 2-ports, 8-ports), (1-port, 4-ports, 8-ports), (2-ports, 4-ports, 8-ports), (1-port, 2-ports, 4-ports, 8-ports)} for terminal equipment capability reporting.

In some embodiments, if the terminal equipment reports supporting a configuration of different SRS ports, the full power capability of 4 ports or 2 ports is also reported.

For example, when the UE reports supporting the configuration of different SRS ports, the UE should also report the full power capability of 4 ports/2 ports. For example, the full power capability reporting of 4 ports/2 ports may be the same as the legacy capability reporting. For another example, the full power capability reporting of 4 ports/2 ports may also be different from the legacy capability reporting.

The above embodiments only illustrate the this disclosure. However, this disclosure is not limited thereto, and appropriate variants may be made on the basis of the above embodiments. For example, the above embodiments may be used alone, or one or more of the above embodiments may be combined together.

As can be seen from the above embodiments, the embodiments of this disclosure enhance the capability reporting of the terminal equipment supporting the full power mode 2, thereby increasing flexibility and reliability and reducing overhead.

### Embodiments of a second aspect

The embodiments of this disclosure provide a capability reporting method described from a network device side. The embodiments of the second aspect may be combined with the embodiments of the first aspect. Same contents as those of the embodiments of the first aspect will not be described again.

FIG. 3 is a schematic diagram illustrating a capability reporting method according to an embodiment of this disclosure. As illustrated in the FIG. 3, the method includes:
301: a network device receives full power capability reporting information transmitted by a terminal equipment, wherein the terminal equipment is capable of supporting an 8-transmission (8Tx) uplink transmission and supporting a full power mode 2.

It should be noted that the FIG. 3 only schematically illustrates the embodiments of this disclosure, however, this disclosure is not limited thereto. For example, an order of execution of the operations may be appropriately adjusted, and furthermore, some other operations may be added, or some operations therein may be removed. And appropriate variants may be made by those skilled in the art according to the above content, without being limited to the disclosure illustrated in the FIG. 3.

The above embodiments only illustrate the disclosure. However, this disclosure is not limited thereto, and appropriate variants may be made on the basis of the above embodiments. For example, the above embodiments may be used alone, or one or more of the above embodiments may be combined together.

As can be seen from the above embodiments, the embodiments of this disclosure enhance the capability reporting of the terminal equipment supporting the full power mode 2, thereby increasing flexibility and reliability and reducing overhead.

### Embodiments of a third aspect

The embodiments of this disclosure provide a capability reporting apparatus. The apparatus may be, for example, a terminal equipment, or may be one or more components or assemblies configured in the terminal equipment. Same contents as those of the embodiments of the first aspect will not be described again.

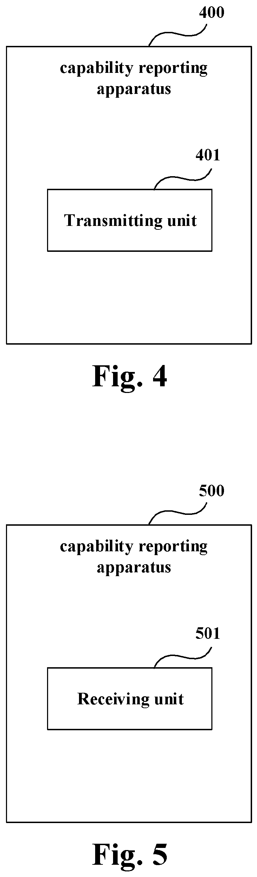

FIG. 4 is a schematic diagram illustrating a capability reporting apparatus according to an embodiment of this disclosure. As illustrated in the FIG. 4, a capability reporting apparatus 400 includes:
a transmitting unit 401 configured to transmit full power capability reporting information to a network device.

In some embodiments, the terminal equipment is a partial coherent terminal equipment with four antenna groups (Ng = 4).

In some embodiments, the full power capability reporting information includes indication information for indicating an antenna group for full power operation.

In some embodiments, the indication information includes one or more bits, each bit indicates a quadruple, and the quadruple indicates that one or more antenna groups among the four antenna groups are required for full power operation.

In some embodiments, the quadruple is divided into one or more sets, in which one set corresponds to one or more quadruples.

In some embodiments, the one or more sets include a first set, a second set, and a third set, wherein the first set corresponds to a quadruple that requires one antenna group for full power operation, the second set corresponds to a quadruple that requires two antenna groups for full power operation, and the third set corresponds to a quadruple that requires three antenna groups for full power operation.

In some embodiments, a terminal equipment supporting the first set is also capable of supporting the second set and/or the third set; and a terminal equipment supporting the second set is also capable of supporting the third set.

In some embodiments, the set includes N quadruples, in which the N is greater than or equal to 1.

In some embodiments, a value of the N varies for different sets.

In some embodiments, the one or more sets are explicitly indicated.

In some embodiments, the one or more sets are implicitly supported.

In some embodiments, the terminal equipment is a full coherent terminal equipment supporting a full power mode 2, and the full power capability reporting information is the same as capability reporting information of a partial coherent terminal equipment with two antenna groups (Ng = 2).

In some embodiments, the terminal equipment is a full coherent terminal equipment supporting a full power mode 2, and the full power capability reporting information is determined according to a codebook type supported by the terminal equipment.

In some embodiments, the terminal equipment supports a codebook of Ng = 2, then the full power capability reporting information is the same as capability reporting information of a partial coherent terminal equipment with two antenna groups (Ng = 2).

In some embodiments, the terminal equipment supports a codebook of Ng = 4, then the full power capability reporting information is the same as capability reporting information of a partial coherent terminal equipment with four antenna groups (Ng = 4).

In some embodiments, the terminal equipment supports codebooks of Ng = 2 and Ng = 4, then the full power capability reporting information includes full power capabilities of Ng = 2 and Ng=4.

In some embodiments, the terminal equipment supports neither the codebook of Ng = 2 nor the codebook of Ng = 4, then the full power capabilities are not reported.

In some embodiments, the terminal equipment is a partial coherent terminal equipment with two antenna groups (Ng = 2), then the full power capability of Ng = 4 is also reported.

In some embodiments, the terminal equipment reports supporting a codebook of Ng = 4, then the full power capability of Ng = 4 is also reported.

In some embodiments, the terminal equipment does not report supporting the codebook of Ng=4, then the full power capability of Ng = 4 is not reported either.

In some embodiments, an SRS resource is configured with different numbers of ports for the full power mode 2, including 1 port, 2 ports, 4 ports, or 8 ports.

In some embodiments, the number of ports of SRS resources is the same for the full power mode 2.

In some embodiments, one or any combination of the following SRS ports is/are reported: {(1-port, 2-ports), (1-port, 4-ports), (1-port, 8-ports), (2-ports, 4-ports), (2-ports, 8-ports), (4-ports, 8-ports), (1-port, 2-ports, 4-ports), (1-port, 2-ports, 8-ports), (1-port, 4-ports, 8-ports), (2-ports, 4-ports, 8-ports), (1-port, 2-ports, 4-ports, 8-ports)} for terminal equipment capability reporting.

In some embodiments, the terminal equipment reports supporting a configuration of different SRS ports, then the full power capability of 4 ports or 2 ports is also reported.

The above embodiments only illustrate the disclosure. However, this disclosure is not limited thereto, and appropriate variants may be made on the basis of the above embodiments. For example, the above embodiments may be used alone, or one or more of the above embodiments may be combined together.

It should be noted that the components or modules related to this disclosure are only described above, however, this disclosure is not limited thereto. The capability reporting apparatus 400 may also include other components or modules. Refer to the related arts for the specific content of these components or modules.

In addition, for the sake of simplicity, the FIG. 4 only illustrates a connection relationship or a signaling direction between components or modules, however, those skilled in the art should appreciate that the related arts such as bus connections can be adopted. The components or modules can be implemented by hardware facilities, such as a processor, a memory, a transmitter, and a receiver, which is not limited in this disclosure.

As can be seen from the above embodiments, the embodiments of this disclosure enhance the capability reporting of the terminal equipment supporting the full power mode 2, thereby increasing flexibility and reliability and reducing overhead.

### Embodiments of a fourth aspect

The embodiments of this disclosure provide a capability reporting apparatus. The apparatus may be, for example, a network device, or may be one or more components or assemblies configured in the network device. Same contents as those of the embodiments of the first and second aspects will not be described again.

FIG. 5 is a schematic diagram illustrating a capability reporting apparatus according to an embodiment of this disclosure. As illustrated in the FIG. 5, a capability reporting apparatus 500 includes:
a receiving unit 501 configured to receive full power capability reporting information transmitted by a terminal equipment, wherein the terminal equipment is capable of supporting an 8-transmission (8Tx) uplink transmission and supporting a full power mode 2.

It should be noted that the components or modules related to this disclosure are only described above, however, this disclosure is not limited thereto. The capability reporting apparatus 500 may also include other components or modules. Refer to the related arts for the specific content of these components or modules.

In addition, for the sake of simplicity, the FIG. 5 only illustrates a connection relationship or a signaling direction between components or modules, however, those skilled in the art should appreciate that the related arts such as bus connections can be adopted. The components or modules can be implemented by hardware facilities, such as a processor, a memory, a transmitter, and a receiver, which is not limited in this disclosure.

As can be seen from the above embodiments, the embodiments of this disclosure enhance the capability reporting of the terminal equipment supporting the full power mode 2, thereby increasing flexibility and reliability and reducing overhead.

### Embodiments of a fifth aspect

The embodiments of this disclosure also provide a communication system. Reference may be made to the FIG. 1. Same contents as those of the embodiments of the first to fourth aspects will not be described herein.

In some embodiments, a communication system 100 may at least include:
a terminal equipment, capable of supporting an 8-transmission (8Tx) uplink transmission and supporting a full power mode 2, configured to transmit full power capability reporting information to a network device; and
the network device configured to receive the full power capability reporting information transmitted by the terminal equipment.

The embodiments of this disclosure further provide a network device, which may be, for example, a base station, however, this disclosure is not limited thereto, and other network devices may also be involved.

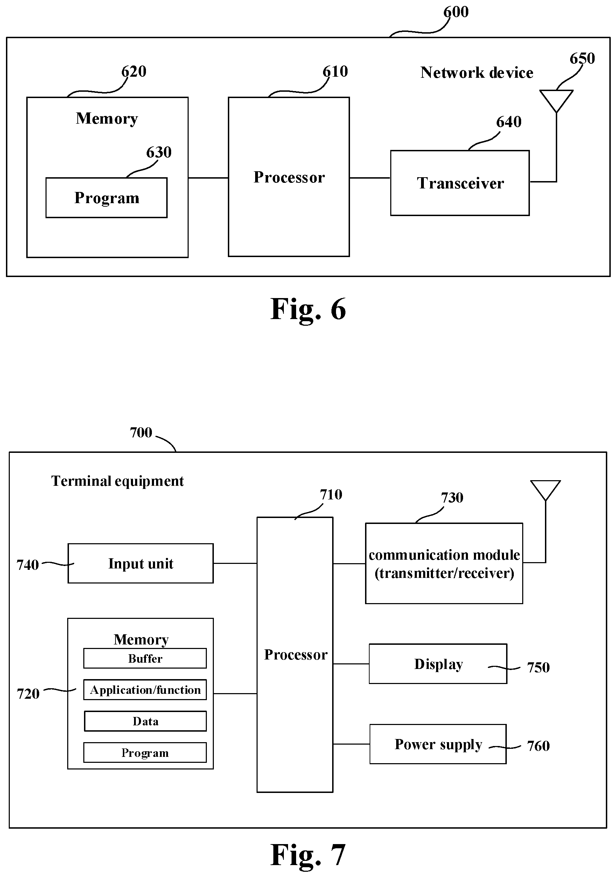

FIG. 6 is a schematic diagram illustrating a composition of a network device according to an embodiment of this disclosure. As illustrated in the FIG. 6, a network device 600 may include: a processor 610 (e.g., a central processing unit CPU) and a memory 620 coupled to the processor 610. The memory 620 may store various data. In addition, the memory 620 may store a program 630 for information processing, and the program 630 may be executed under the control of the processor 610.

For example, the processor 610 may be configured to execute a program to implement the capability reporting method according to the embodiments of the second aspect. For example, the processor 610 may be configured to receive full power capability reporting information transmitted by a terminal equipment, wherein the terminal equipment is capable of supporting an 8-transmission (8Tx) uplink transmission and supporting a full power mode 2.

In addition, as illustrated in the FIG. 6, the network device 600 may further include: a transceiver 640 and an antenna 650, wherein the functions of the above components are similar to those in the relevant art and will not be described again herein. It should be noted that the network device 600 does not necessarily include all the components illustrated in the FIG. 6. In addition, the network device 600 may also include components not illustrated in the FIG. 6. Please refer to the relevant art.

The embodiments of this disclosure also provide a terminal equipment, however, this disclosure is not limited thereto, and other devices may also be involved.

FIG. 7 is a schematic diagram illustrating a terminal equipment according to an embodiment of this disclosure. As illustrated in the FIG. 7, a terminal equipment 700 may include a processor 710 and a memory 720 that stores data and a program and is coupled to the processor 710. It should be noted that the figure is exemplary; and other types of structures may also be used to supplement or replace this structure, in order to implement telecommunication functions or other functions.

For example, the processor 710 may be configured to execute a program to implement the capability reporting method according to the embodiments of the first aspect. For example, the processor 710 may be configured to transmit full power capability reporting information to a network device.

As illustrated in the FIG. 7, the terminal equipment 700 may further include: a communication module 730, an input unit 740, a display 750, and a power supply 760, wherein the functions of the above components are similar to those in the relevant art and will not be described again herein. It should be noted that the terminal equipment 700 does not necessarily include all the components illustrated in the FIG. 7, and the above components are not necessarily required. In addition, the terminal equipment 700 may also include components not illustrated in the FIG. 7. Please refer to the relevant art.

The embodiments of this disclosure also provide a computer program, wherein when the program is executed in a terminal equipment, the program enables the terminal equipment to perform the capability reporting method according to the embodiments of the first aspect.

The embodiments of this disclosure also provide a storage medium storing a computer program, wherein the computer program enables a terminal equipment to implement the capability reporting method according to the embodiments of the first aspect.

The embodiments of this disclosure also provide a computer program, wherein when the program is executed in a network device, the program enables the network device to implement the capability reporting method according to the embodiments of the second aspect.

The embodiments of this disclosure also provide a storage medium storing a computer program, wherein the computer program enables a network device to implement the capability reporting method according to the embodiments of the second aspect.

The above device and method of this disclosure may be implemented by hardware, or by hardware in combination with software. This disclosure relates to such a computer-readable program that when the program is executed by a logic device, the logic device is enabled to carry out the device or components as described above, or to carry out the method or steps as described above. This disclosure also relates to a storage medium for storing the above program, such as a hard disk, a magnetic disk, a CD, a DVD, and a flash memory, etc.

The method/device described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. These software modules may respectively correspond to the steps shown in the drawings. And these hardware modules, for example, may be carried out by firming these software modules by using a field programmable gate array (FPGA).

The software modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information to the memory medium; or the memory medium may be a component of the processor. The processor and the memory medium may be located in an ASIC. The software modules may be stored in a memory of a mobile terminal and may also be stored in a memory card of a pluggable mobile terminal. For example, if equipment (such as a mobile terminal) employs an MEGA-SIM card of a relatively large capacity or a flash memory device of a large capacity, the software modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this disclosure. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative, and not intended to limit the protection scope of this disclosure. Various variants and amendments to this disclosure may be made by those skilled in the art according to the spirits and principle of this disclosure, and such variants and amendments fall within the scope of this disclosure.

As to implementations containing the above embodiments, supplements are further disclosed below:
1. A capability reporting method applied to a terminal equipment capable of supporting an 8-transmission (8Tx) uplink transmission, the terminal equipment supporting a full power mode 2, the method including:
   transmitting, by the terminal equipment, full power capability reporting information to a network device.
2. A capability reporting method applied to a network device, including:
   receiving, by the network device, full power capability reporting information transmitted by a terminal equipment, wherein the terminal equipment is capable of supporting an 8-transmission (8Tx) uplink transmission and supporting a full power mode 2.
3. A terminal equipment, including: a memory and a processor, wherein the memory stores a computer program, and the processor is configured to execute the computer program to implement the capability reporting method according to supplement 1.
4. A network device, including: a memory and a processor, wherein the memory stores a computer program, and the processor is configured to execute the computer program to implement the capability reporting method according to supplement 2.

## Claims

1. A capability reporting apparatus, configured in a terminal equipment capable of supporting an 8Tx uplink transmission, the terminal equipment supporting a full power mode 2, comprising:
a transmitting unit configured to transmit full power capability reporting information to a network device.

2. The apparatus according to claim 1, wherein the terminal equipment is a partial coherent terminal equipment with four antenna groups.

3. The apparatus according to claim 2, wherein the full power capability reporting information comprises indication information for indicating an antenna group for full power operation.

4. The apparatus according to claim 3, wherein the indication information comprises one or more bits, each bit indicates a quadruple, and the quadruple indicates that one or more antenna groups among the four antenna groups are required for full power operation.

5. The apparatus according to claim 4, wherein the quadruple is divided into one or more sets, in which one set corresponds to one or more quadruples.

6. The apparatus according to claim 5, wherein the one or more sets comprise a first set, a second set, and a third set, the first set corresponding to a quadruple that requires one antenna group for full power operation, the second set corresponding to a quadruple that requires two antenna groups for full power operation, and the third set corresponding to a quadruple that requires three antenna groups for full power operation.

7. The apparatus according to claim 6, wherein a terminal equipment supporting the first set is also capable of supporting the second set and/or the third set; and a terminal equipment supporting the second set is also capable of supporting the third set.

8. The apparatus according to claim 6, wherein the set comprises N quadruples, where the N is greater than or equal to 1; and a value of the N varies for different sets.

9. The apparatus according to claim 4, wherein the one or more sets are explicitly indicated, or the one or more sets are implicitly supported.

10. The apparatus according to claim 1, wherein the terminal equipment is a full coherent terminal equipment supporting a full power mode 2, and the full power capability reporting information is the same as capability reporting information of a partial coherent terminal equipment with two antenna groups.

11. The apparatus according to claim 1, wherein the terminal equipment is a full coherent terminal equipment supporting a full power mode 2, and the full power capability reporting information is determined according to a codebook type supported by the terminal equipment.

12. The apparatus according to claim 11, wherein the terminal equipment supports a codebook of Ng = 2, then the full power capability reporting information is the same as capability reporting information of a partial coherent terminal equipment with two antenna groups; and
the terminal equipment supports a codebook of Ng = 4, then the full power capability reporting information is the same as capability reporting information of a partial coherent terminal equipment with four antenna groups.

13. The apparatus according to claim 11, wherein the terminal equipment supports codebooks of Ng = 2 and Ng = 4, then the full power capability reporting information comprises full power capabilities of Ng = 2 and Ng = 4; and
the terminal equipment supports neither a codebook of Ng = 2 nor a codebook of Ng = 4, then the full power capabilities are not reported.

14. The apparatus according to claim 1, wherein the terminal equipment is a partial coherent terminal equipment with two antenna groups, then full power capability of Ng = 4 is also reported.

15. The apparatus according to claim 1, wherein the terminal equipment reports supporting a codebook of Ng = 4, then full power capability of Ng = 4 is also reported; or
the terminal equipment does not report supporting a codebook of Ng = 4, then full power capability of Ng = 4 is not reported either.

16. The apparatus according to claim 1, wherein an SRS resource is configured with different number of ports for the full power mode 2, comprising 1 port, 2 ports, 4 ports, or 8 ports; or
the number of ports of SRS resources is the same for the full power mode 2.

17. The apparatus according to claim 16, wherein one or any combination of the following SRS ports is/are reported: {(1-port, 2-ports), (1-port, 4-ports), (1-port, 8-ports), (2-ports, 4-ports), (2-ports, 8-ports), (4-ports, 8-ports), (1-port, 2-ports, 4-ports), (1-port, 2-ports, 8-ports), (1-port, 4-ports, 8-ports), (2-ports, 4-ports, 8-ports), (1-port, 2-ports, 4-ports, 8-ports)} for terminal equipment capability reporting.

18. The apparatus according to claim 1, wherein the terminal equipment reports supporting a configuration of different SRS ports, then full power capability of 4 ports or 2 ports is also reported.

19. A capability reporting apparatus, configured in a network device, the apparatus comprising:
a receiving unit configured to receive full power capability reporting information transmitted by a terminal equipment, wherein the terminal equipment is capable of supporting an 8Tx uplink transmission and supporting a full power mode 2.

20. A communication system, comprising:
a terminal equipment, capable of supporting an 8Tx uplink transmission and supporting a full power mode 2, configured to transmit full power capability reporting information to a network device; and
the network device configured to receive the full power capability reporting information transmitted by the terminal equipment.
